(19)

Europäisches
Patentamt

European
Patent Office

Office européen
des brevets

(11)  **EP 4 290 822 A1**

(12)  **EUROPEAN PATENT APPLICATION**

(43) Date of publication:
**13.12.2023   Bulletin 2023/50**

(21) Application number: **22465540.7**

(22) Date of filing: **10.06.2022**

(51) International Patent Classification (IPC):
**H04L 47/28** *(2022.01)*      **G06F 12/00** *(2006.01)*
**G06F 13/00** *(2006.01)*      **H04L 67/12** *(2022.01)*

(52) Cooperative Patent Classification (CPC):
**H04L 47/28; G06F 12/00; G06N 20/00;**
**H04L 65/00; H04N 21/00;** H04L 67/12

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Grigorescu, Sorin Mihai**
**500132 Brasov (RO)**

(72) Inventors:
• **GRIGORESCU, Sorin Mihai**
  **500132 Brasov (RO)**
• **ZAHA, Mihai**
  **127147 Slobozia (RO)**

(74) Representative: **Fierascu, Cosmina-Catrinel**
**Rominvent SA**
**35 Ermil Pangratti Street**
**Sector 1**
**011882  Bucharest (RO)**

(54)  **METHOD AND AI OPERATING SYSTEM FOR ROBOTICS AND COMPLEX AUTOMATION**

(57)    The invention relates to a device comprising at least a processing means and a storage means, wherein the storage means is configured to store at least one data stream comprising a plurality of data packets, wherein each data packet has an associated timestamp, the processing means is configured to request data packets, at a predefined sample rate, from the at least one data stream stored in the storage means, by providing a timestamp; and the storage means is configured to retrieve data packets by using said timestamp.

Fig. 1

**Description**

The invention relates to methods and systems for robotics and complex automation.

The frameworks for controlling autonomous robots and complex automation applications are Operating Systems (OS) capable of scheduling perception-and-control tasks, as well as providing real-time data communication to other robotic peers and cloud computers. Real-time communication and data management is particularly important in the age of Artificial Intelligence (AI), since the development and evaluation of AI algorithms is dependent on high quantities of sensory and control information.

Over the last decade, AI and Deep Learning became the main technologies behind many novel robotics applications, ranging from autonomous navigation and self-driving to dexterous object manipulation. The key ingredient in a deep learning algorithm is the data collected from the robots themselves, which is required for training the Deep Neural Networks (DNN) that power up the perception-and-control pipelines of the robots.

<Background>

There are several variants of robotics middleware available on the market, such as Robot Operating System (ROS), Open Robot Control Software (OROCOS), Nvidia Isaac SDK, Mobile Robot Programming Toolkit (MRPT), Player/Stage and Orca. These are typically collections of tools and libraries for developing robots. Although they provide capabilities for distributed multi-robot communication, they lack the mechanisms required to build and deploy AI robotic components. AI modules are either encapsulated in packages, without any re-train and update functionalities, or the frameworks are patched with separated AI stacks. These stacks are typically created with design patterns that serve other types of applications, thus imposing a high overhead on their maintenance and stability.

A general purpose robotics operating system for unmanned vehicles (autonomous cars or drones) is disclosed in US Patents US10331136B2 and US9833901B2. The disclosed system describes the software architecture for a single computer which runs the vehicle control system as a sequential processing pipeline without taking into account how different vehicles exchange data between them in order to better plan their movement. Also, the invention does not describe how AI and learning systems can be designed, trained and deployed using the proposed approach.

A kind of robot hybrid system application framework based on a multi-core processor framework is disclosed in US Patent US10265848B2. The invention presents how two operating systems (a real-time OS and a non real-time OS) can be run on the same computing platform using multiple cores. The non real-time OS uses a ROS node for communication. The disclosure does not present a communication system between multiple robots, as well as how training and deployment of AI components can be performed.

A method and device for managing shared memory in the robot operating system (ROS) is presented in US Patent US9967222B2. The invention describes how a shared memory accessed by a ROS node can be managed in a vehicle (car) controller. Such an additional system is required due to the faulty ROS design, which does not include memory management.

Methods and systems for multi-robotic management are disclosed in US Patent US10168690B2, where multiple client robots are connected to a leader robot and a shared database. Apart from the absence of functionalities for AI systems, the approach is centralized and dependent on a central leader robot, so its scalability is limited.

Neither of the above systems are capable of exchanging the data between multiple robots in a uniform and scalable way.

<Summary of the invention>

It is the aim of the present invention to provide a system that is capable of exchanging real-time data between modules of one or more robots and one or more AI training servers, in a uniform and scalable way.

According to a first aspect of the present invention there is provided a device comprising at least a processing means and a storage means, wherein the storage means is configured to store at least one data stream comprising a plurality of data packets, wherein each data packet has an associated timestamp, the processing means is configured to request data packets, at a predefined sample rate, from the at least one data stream stored in the storage means, by providing a timestamp; and the storage means is configured to retrieve data packets by using said timestamp.

In a preferred embodiment, the device further comprises a network interface, configured to receive the at least one data stream from a communication network and to write the at least one data stream to the storage means. The at least one data stream may come from a sensor via the network interface. Alternatively, the sensor is located in the device and the data stream is written directly to the storage means without passing through the network interface.

In another preferred embodiment, freely combinable with the previous ones, the storage means is configured to store at least a first data stream having a first type and a first sample rate; and the processing means is configured to request data packets from the first data stream at the predefined sample rate which is different from the first sample rate.

Even more preferably, the storage means is further configured to store at least a second data stream having a second type and a second sample rate; wherein the first type is different from the second type and/or the first sample rate is different from the second sample rate; and/or the processing means is configured to request data packets from the second data stream at the predefined sample rate which is different from the second sample rate.

In yet another preferred embodiment, freely combinable with the previous ones, the processing means is further configured to write an output data stream with timestamp index to the storage means, at a predefined output sample rate. The output sample rate may be the same or different from the sample rate of the processing means to request data packets.

In yet another preferred embodiment, freely combinable with the previous ones, the processing means is further configured to transmit an output data stream with timestamp index to the communication network, at a predefined output sample rate.

In yet another preferred embodiment, freely combinable with the previous ones, the device further comprises at least one actuator, configured to read an input data stream from the storage means using a timestamp index.

In yet another preferred embodiment, freely combinable with the previous ones, the processing means comprises a deep neural network and is further configured to train the artificial intelligence model based on the input data stream.

In a further aspect, the invention relates to a signaling server configured to receive metadata from the at least one device of the invention. At the same time, the signaling server may transmit the metadata to the same device, for example the device comprises two processing means and metadata are sent from one processing means to another. Alternatively, the signaling server may transmit the metadata to the processing means of another device according to the present invention.

Preferably, the metadata comprises device identifier, processing means identifier, input type, output type and sample rate.

Preferably, the metadata are exchanged between the devices and the servers by using a WebRTC protocol.

According to another aspect, the invention relates to a system comprising one or more signaling servers and one or more devices.

Preferably, the system comprises at least one device according to the present invention and at least two redundant signaling servers according to the present invention.

In a further aspect, the invention relates to a method of data processing in a device according to the present invention, comprising:

requesting, by the processing means, data packets, at a predefined sample rate, from the at least one data stream stored in the storage means, by providing a timestamp; and

retrieving, by the storage means, data packets, by using said timestamp.

In a preferred embodiment, the method further comprises, before requesting, storing, by the storage means, the at least one data stream comprising a plurality of data packets, wherein each data packet has an associated timestamp. Preferably, the data stream is received from a communication network or a sensor which is in the device.

In another preferred embodiment, freely combinable with the previous ones, the method comprises before requesting, storing, by the storage means, at least a first data stream having a first type and a first sample rate; and in the requesting step, data packets from the first data stream are requested by the processing means at the predefined sample rate which is different from the first sample rate. Further, the method may comprise, in the storing step, storing, by the storage means, at least a second data stream having a second type and a second sample rate, wherein the first type is different from the second type and/or the first sample rate is different from the second sample rate. In addition, the method can further comprise, in the requesting step, data packets from the second data stream being requested by the processing means at the predefined sample rate which is different from the second sample rate.

In yet another preferred embodiment, freely combinable with the previous ones, the method further comprises writing an output data stream with timestamp index to the storage means, at a predefined output sample rate and/or transmitting an output data stream with timestamp index to the communication network, at a predefined output sample rate.

In yet another preferred embodiment, freely combinable with the previous ones, the processing means of the device according to the invention method further comprises a deep neural network and the method further comprises training an artificial intelligence model based on the at least one data stream. The model training may comprise, for example, requesting user input to annotate the inputs and/or objects of interest. In another example, the model training may comprise annotating the inputs and/or objects of interest by self-supervised learning.

Preferably, the system and the method of the present invention can be used in autonomous driving and/or autonomous flight control and/or autonomous surveillance.

Further features of the present invention will be apparent from the following description of exemplary embodiments with reference to the attached drawings.

<Brief description of the drawings>

Fig. 1 is a block diagram illustrating the system according to the invention
Fig. 2 and 3 are block diagrams illustrating the distributed robotics application in the field of autonomous surveillance
Fig. 4 is a diagram illustrating the distributed robotics application in the field of autonomous driving
Fig. 5 is a block diagram illustrating the Inference Platform executed on the autonomous vehicle
Fig. 6 is a block diagram illustrating the storage means (so-called Augmented Memory) used for synchronization
Fig. 7 is a block diagram illustrating the AI Engine Filter which includes a processing means (so-called filter) with Deep Neural Network
Fig. 8 is a block diagram illustrating the AI Training Platform
Fig. 9 is a block diagram illustrating the hardware components of a computer being part of AI Engine and AI Training Platform
Fig. 10 is a block diagram illustrating the hardware components of a device according to the invention

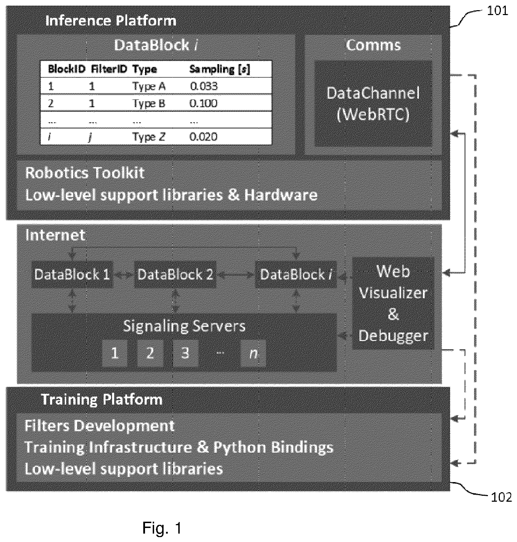

A system of present invention includes two distinct platforms: i) the Inference Platform 101, located on the robots' embedded computing devices, and ii) the AI Training Platform 102, executed on the High Performance Computers (HPC) which are used to train AI algorithms. The Inference Platform 101 on each robot is a real-time implementation of a so-called DataBlock. A DataBlock is a table-like structure identified through an unique ID, where each entry is a so-called Filter. A filter is a processing means which delivers the result of a specific algorithm (e.g. data acquisition, perception, sensor fusion, motion planning, etc.) at specified sampling time rates. A robotic application is implemented by interconnecting different filters. The outputs of the filters are either computed locally on the robot, or are received from other robots through a DataChannel communication pipeline. For example, the BlockID column of the DataBlock illustrated in Fig. 1 indicates the DataBlock ID of the robot calculating the outputs of the filters on the local DataBlock i.

The communication is routed through the internet using the WebRTC protocol implemented in the DataChannel. The DataChannel enables direct peer-to-peer communication, which is established via a set of redundant Signaling Servers that facilitate the discovery of robots between themselves once a robot starts its DataBlock and registers it in the signaling servers. For training the AI algorithms, the information is streamed from the DataBlocks to the AI Training Platform 102. The AI Training Platform 102 offers the software infrastructure required to design, train, deploy and maintain the AI modules. The dotted lines in Fig. 1 represent communication channels which are used solely for acquiring training data and updating the AI modules running in the DataBlocks.

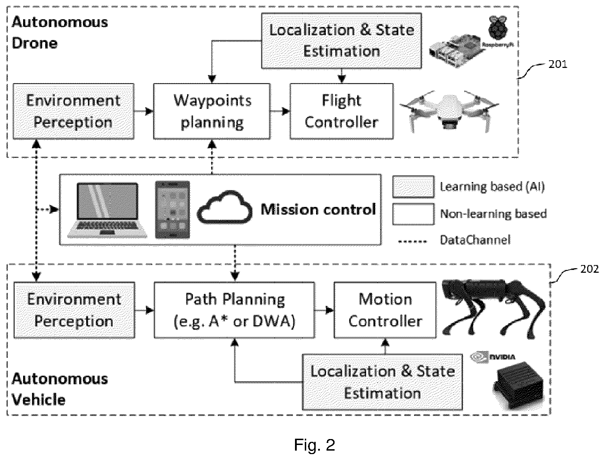

The system from Fig. 1 has been designed in order to enable the rapid development of distributed robotics and complex automation applications. For the sake of clarity, we will follow the example of a distributed robotics application in the field of surveillance, illustrated in Fig. 2.

The hardware components used in this example are i) an autonomous wheeled vehicle 202 equipped with a powerful embedded computer (e.g. NVIDIA AGX Xavier), LiDAR and cameras, ii) an autonomous drone 201 equipped with a small computer for flight control (e.g. Raspberry PI) and iii) a mission control system, where the user can upload geolocation data for the areas to be surveilled. The mission control system can be located either in the cloud, directly on a laptop or desktop computer, or on a smartphone. Both autonomous robots are driven through perception-and-control pipelines, where the paths and waypoints are planned using data from the Environment Perception and Localization & State Estimation modules. Motion and flight control is executed based on the calculated paths and waypoints, respectively.

The state-of-the-art algorithms running in the Environment Perception and Localization & State Estimation components from Fig. 2 are learning-based, meaning that saved sensory and control data is required for training the AI architectures prior to their deployment. The AI architectures encountered in such robots are variants of Convolutional (CNN), Recurrent (RNN) and fully connected Neural Networks. Training is typically performed offline using powerful cloud computers.

Apart from the local control system, each autonomous robot can benefit in its mission objectives by using, for example, environment perception information obtained by the other robot. The vehicle can plan its path based on obstacles visible solely from the air, while the drone can plan its waypoints using obstacles detectable only with the LiDAR installed on the wheeled vehicle. Additionally, compute intensive operations, such as the forward pass through a large deep neural network, could be performed on the most powerful computing platform shared by the robots, that is, the embedded computer installed on the wheeled vehicle 202. Both functionalities require a stable communication between the two platforms.

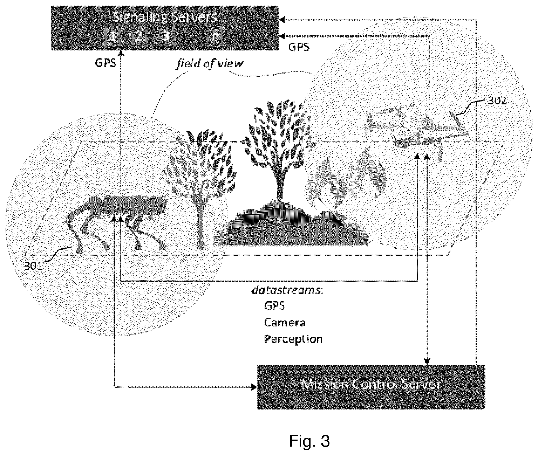

Fig. 3 illustrates a similar distributed robotics application to autonomous surveillance. The robot dog 301 designed to fight forest fires does not perceive the fire in its field of view. The drone 302, located close to the forest fire, is able to send environmental information to the robot dog. The information collected by the drone 302 is used by the robotic dog 301 in order to plan its intervention. Additionally, the information collected by both robots is sent to a Mission Control Server that can take high-level actions, such as alerting the fire department.

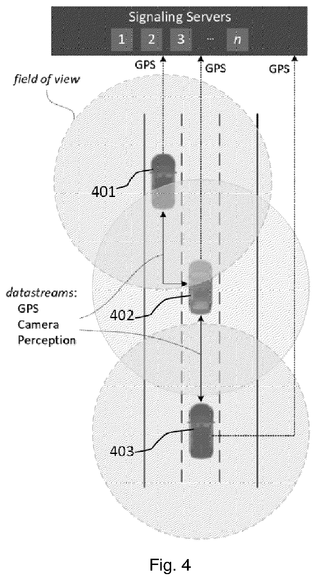

Fig. 4 illustrates a distributed application to autonomous driving. Based on GPS data, the signaling servers will automatically connect between cars 401, 402, 403, which are located relatively close to each other. Once connected, the cars 401, 402, 403 can share perception information, enabling them to plan their motion based on obstacles which are not yet visible in their field of view. The red car 402 receives obstacle data from the field of view of the blue cars 401, 403.

A. Inference Platform

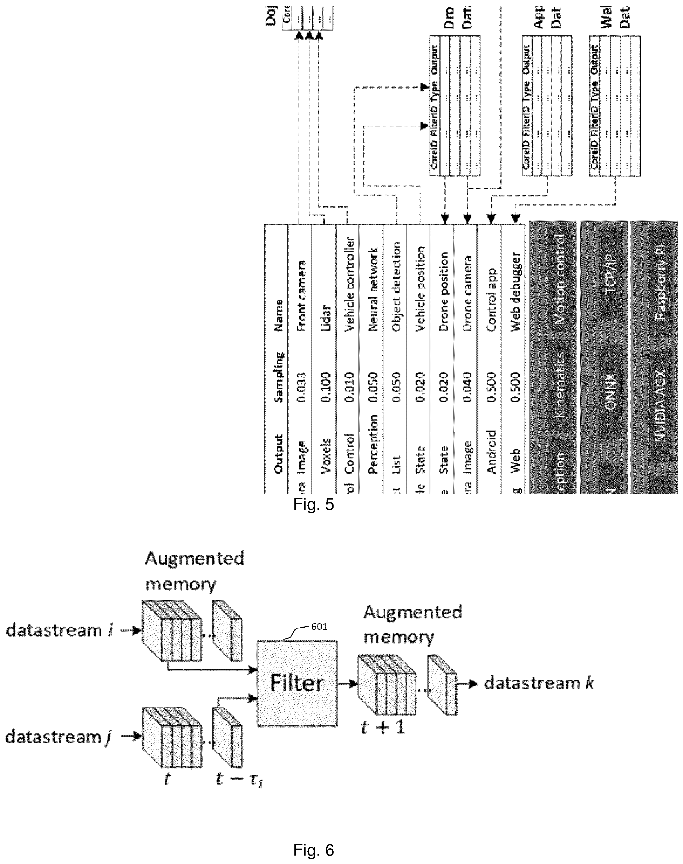

The Inference Platform 101, illustrated in Fig. 5, is an implementation of the DataBlock. We will detail its design principles based on the distributed robotics application from Fig. 2. Fig. 5 shows five DataBlocks running on five different devices. For the sake of clarity, only the DataBlock executed on the vehicle is detailed (left area of the figure). A DataBlock is a table-like structure specifying the structure of the processing pipeline running on a computing device that has an unique BlockID. The BlockID is equal to the device's MAC address. Each entry in the DataBlock is a so-called Filter running at a given sampling time. A filter outputs a processed datastream, while consuming datastreams provided by other filters. The output datastream is obtained either by locally processing the input datastreams, or by mapping the output of a filter computed on a remote device. In the latter case, the output datastream of a filter running on a remote computer is mirrored locally, thus masking the actual location of computation. The details on the communication and synchronization mechanisms will be explained in a further section. In the example from Fig. 5, the BlockID of the vehicle's DataBlock is 1. The first 6 filters on the vehicle are computed locally, while the rest are remote filters computed in the cloud, on the drone (BlockID 2), on a smartphone app (BlockID 3) and within a browser (BlockID 4). Using this mechanism, remotely computed datastreams are injected into the perception-and-control pipeline of the vehicle. Namely, the drone's camera and state are used as additional data for controlling the robot. The other way around, the same mechanism is used to transmit the vehicle's position to the drone.

The example also illustrates how computing resources can be shared between robots. The datastreams from both the vehicle and the drone's camera are processed on the vehicle by the neural network filter 4, which receives as input the datastreams from filters 1 (vehicle camera) and 2 (drone camera). As detailed in a further section, the DNN outputs a datastream comprising various prediction data dependent on the DNN architecture (e.g. object lists, semantic segmentation, lane boundaries, etc.). The perception information is used locally on the vehicle for path planning, as well as on the drone for waypoints planning. In order to limit the amount of transmitted data, we use the additional post-processing filter 5 in order to select only the desired predicted objects information, which in this case is the detected objects list. The design of a new filter is supported by a Robotics Toolkit that provides perception, kinematics and motion control functions, as well as the AI Engine detailed in a further section. The perception functions include Simultaneous Localization and Mapping (SLAM), Visual-Inertial Odometry (VIO) pipelines and basic 3D reconstruction and keypoints tracking methods. The kinematics module includes different robot models (e.g. vehicle, drone and redundant manipulator models), while the motion control module provides simple PID control functions, as well as horizon and model predictive control methods that can be included in the DataBlock. The Robotics Toolkit is scalable and can be upgraded with additional methods. Low-level support libraries are included in order to support the development of the Robotics Toolkit functions. These include libraries for parallel processing on Graphical Processing Units (GPU), such as CUDA, libraries for propagating data through deep neural networks, such as cuDNN and ONNX, as well as basic TCP/IP network communication functions.

Inference Platform 101 has been successfully compiled on different operating systems (Linux, Windows and Android) with different types of processors, such as PC's equipped with x86 and ARM processors, ARM System-On-a-Chip (SOC) devices (smartphones), as well as NVIDIA AGX Xavier and Raspberry PI embedded boards. The disk size and resource utilization of Inference Platform 101 depends on the number of filters included in the DataBlock. For example, a filter implementing a DNN forward pass requires both extra storage and computing resources, as opposed to a filter which just acquires data from a sensor. Without any complex filters included, the footprint of Inference Platform 101 is small (< 5MB), enabling its deployment on performant embedded boards and HPC clusters, as well as onto small embedded hardware (e.g. Raspberry PI).

B. DataChannel and Synchronization

The remote connections used to map the filters between the DataBlocks in Fig. 5 are established using a so-called DataChannel implemented based on the WebRTC protocol. WebRTC enables real-time communication capabilities by supporting video, voice and generic data to be sent between peers.

A redundant set of Signaling Servers are used to establish peer-to-peer communication over the internet, that is, the communication required by datastreams connecting mapped filters running on different DataBlocks. A signaling server's sole purpose is to set up peer-to-peer communication. When a DataBlock is started, it automatically sends its clock time and metadata (BlockID; filter IDs, input/output types, sampling time and description of each filter) to n signaling servers. This allows a robot to discover the resources of other robotic systems.

In theory, a single signaling server can be used to establish peer-to-peer communication for all robots. However, if that single signaling server stops functioning, then the robots will not be able to start the communication datastreams. By using n redundant servers, distributed worldwide, we minimize the risk of not being able to grant peer-to-peer connections.

The storage means (so-called Augmented Memory or timestamp-addressable memory), from Fig. 6 has been implemented in order to synchronize different datastreams. It acts as a First-In-First-Out (FIFO) cache of size ti, which stores a finite number of filter output samples together with their timestamps. Augmented Memory is indexed and addressed by timestamps. These timestamps can be used to synchronize data coming from two filters running at different sampling times. The filter 601 from Fig. 6 uses datastreams i and j as input, while delivering datastream k as output. The synchronized samples are extracted from the Augmented Memory using the available timestamps.

A variant of the DataBlock is also available for debugging purposes. Using a browser, one can tap into a Signaling Server to check and visualize the outputs of the registered DataBlocks on that specific server. It is also used to update the DataBlock and Filters to new versions, as well as to start/stop the Filters and pass high-level mission objectives.

C. AI Engine

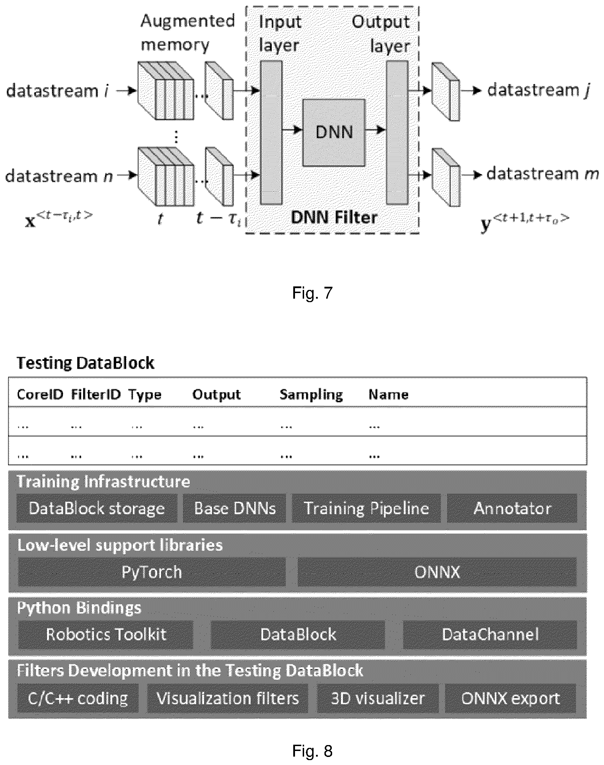

One of the main components in the Robotics Toolkit is the AI Engine filter type illustrated in Fig. 7, which acts as an interface and wrapper of various Deep Neural Networks (DNNs). It is used for passing input datastreams through the layers of a DNN. The architecture of the AI Engine has been designed in conjunction with the AI Training Platform 102, which is used for designing and training DNNs. Namely, DNNs constructed and trained on the AI Training Platform 102 are automatically sent to the DNN filters in the registered DataBlocks.

Temporal sequences of multiple input datastreams $x_{<t-ti;t>}$ are used to produce temporal sequences of output datastreams $y_{<t+1;t+T(o)>}$:

$$x_{<t-T(i);t>} = [x_{<t-T(i)>}; ::::;x_{<t>}]; (1)$$

$$y_{<t+1;t+T(o)>} = [y_{<t+1>};y_{<t+2>}; ::::;y_{<t+T(o)>}]; (2)$$

where t is the discrete timestamp, T(i) is the temporal length of input samples and T(o) is the temporal prediction horizon.

The elements of $x_{<t-T(i);t>}$ represent cached data from the Augmented Memory.

Each datastream is passed to the input layer of the DNN as a separate input branch of variable batch size. Similarly, the output layer of the DNN provides datastreams through its output branches.

The Open Neural Network eXchange (ONNX) format was chosen for storing the structure and weights of the developed neural networks.

D. AI Training Platform

The design, implementation, training and maintenance of the filters within a DataBlock is performed using the AI Training Platform 102 from Fig. 8. The AI Training Platform 102 is executed on dedicated computers, such as powerful HPC clusters. It is composed of a development and testing DataBlock and a set of libraries which can be used for the rapid prototyping of the filters. The low-level AI libraries of choice for designing and training DNNs are PyTorch and ONNX. PyTorch has been chosen due to its flexibility and support for vision based neural networks, while ONNX has been chosen for its open-source format, stability and portability.

A Base DNN structure has been implemented on top of PyTorch using the AI Engine design described in the previous section. Each DNN exported from the AI Training Platform 102 is inherited from this base structure given in a configuration file which describes the input/output branches and tensor shapes. The same configuration file is loaded by the DNN filters in the Inference Platform.

The training pipeline works by reading stored datastreams acquired from various DataBlocks running on robotic systems. In the example from Fig. 5, the AI Training Platform 102 DataBlock stores the camera, LiDAR and control signals from the Vehicle DataBlock, which are later used for training the DNNs.

A neural network is trained by evaluating pairs of data samples x<t-T(i);t> and labels y<t+1 ;t+T(o)>. The system treats both the samples and the labels as different datastreams. x<t-T(i);t> are input datastreams, while the labels y<t+1 ;t+T(o)> are output datastreams. An Annotator is provided for visualizing the recorded datastreams. The labels can be obtained either by manually annotating the corresponding datastreams using the Annotator tool, or by generating them using self-supervised learning methods. The inner modules of a deep neural network are typically composed of trainable layers having different hyperparameters (convolutional and recurrent layers, ResNet and RegNet submodules, etc.). However, extensive analysis and work has to be done on the pre-processing and post-processing layers. For example, one-shot object detectors such as RetinaNet or Yolo require object anchoring mechanisms and non-maximum suppression functions in order to recognize objects. These additional processing steps can be implemented using functions from the Robotics Toolkit.

AI Training Platform 102 already contains a number of filters for data acquisition, AI inference and training, perception, planning and control. These can be used to construct a DataBlock. When a new filter is developed, it is tested by running the complete DataBlock of filters, as opposed to testing it as a separate component. This enables the capturing of the intrinsic dependencies between the whole components that make up a processing pipeline, instead of just optimizing a single component.

A special type of filters which are used during development are the visualization filters. These consume datastreams, while outputting images that superimpose the received inputs. For example, the sensing visualizer filter superimposes perception datastreams such as images, lidar, detected objects, keypoints and segmented surfaces. The AI Training Platform 102 also includes a 3D visualization filter used in the analysis of perception systems and kinematic chains.

E. Hardware components: computer and device

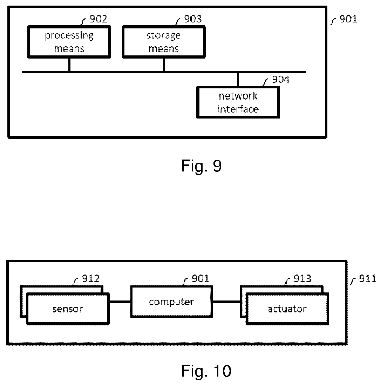

As presented in Fig. 9, a computer 901 mentioned in the above embodiments, in the most general form, includes a processing means 902, which typically is CPU and/or GPU, and a storage means 903, which includes cache memory for storing the data streams, and may also include other kinds of memory, for example RAM, hard disk, etc. The computer may also include a network interface 904 to receive the data streams from the network and transmit data streams from the processing means to the network. Network interface can be wired or wireless and may operate on any network protocol, for example Ethernet, Wi-Fi, Bluetooth, NFC, etc.

As presented in Fig. 10, a device 911 mentioned in above embodiments, in the most general form, includes a computer 901, and may include one or more sensors 912 and/or one or more actuators 913. Examples of sensors are camera, radar, lidar, GPS, temperature sensor, etc. Examples of actuators are all kinds of motors, electromechanical actuators, electromagnetic actuators, electrohydraulic actuators, etc.

**Claims**

1. A device comprising at least a processing means and a storage means, wherein

   the storage means is configured to store at least one data stream comprising a plurality of data packets, wherein each data packet has an associated timestamp,
   the processing means is configured to request data packets, at a predefined sample rate, from the at least one data stream stored in the storage means, by providing a timestamp; and
   the storage means is configured to retrieve data packets by using said timestamp.

2. The device according to claim 1, further comprising a network interface, configured to receive the at least one data stream from a communication network and to write the at least one data stream to the storage means.

3. The device according to any preceding claims, wherein

   the storage means is configured to store at least a first data stream having a first type and a first sample rate; and
   the processing means is configured to request data packets from the first data stream at the predefined sample rate which is different from the first sample rate.

4. The device according to claim 3, wherein

   the storage means is further configured to store at least a second data stream having a second type and a second sample rate; wherein
the first type is different from the second type and/or the first sample rate is different from the second sample rate; and/or
the processing means is configured to request data packets from the second data stream at the predefined sample rate which is different from the second sample rate.

5. The device according to any preceding claims, wherein the processing means is further configured to write an output data stream with timestamp index to the storage means, at a predefined output sample rate.

6. The device according to any preceding claims, wherein the processing means is further configured to transmit an output data stream with timestamp index to the communication network, at a predefined output sample rate.

7. The device according to any preceding claim, wherein the processing means comprises a deep neural network and is further configured to train an artificial intelligence model based on the at least one data stream.

8. A system comprising at least one device according to any of the claims 1-7 and at least one signaling server configured to receive metadata from the at least one device and to transmit the metadata to the same or other device of any of the claims 1-7.

9. A signaling server according to claim 8, wherein the metadata comprises device identifier, processing means identifier, input type, output type and sample rate.

10. A method of data processing in a device according to any of the claims 1-7, comprising:

requesting, by the processing means, data packets, at a predefined sample rate, from the at least one data stream stored in the storage means, by providing a timestamp; and
retrieving, by the storage means, data packets, by using said timestamp.

11. The method according to claim 10, further comprising receiving the at least one data stream from a communication network and writing the at least one data stream to the storage means.

12. The method according to any of the claims 10-11, further comprising:

before requesting, storing, by the storage means, at least a first data stream having a first type and a first sample rate; and wherein
in the requesting step, data packets from the first data stream are requested by the processing means at the predefined sample rate which is different from the first sample rate.

13. The method according to claim 12, further comprising

in the storing step, storing, by the storage means, at least a second data stream having a second type and a second sample rate, wherein the first type is different from the second type and/or the first sample rate is different from the second sample rate; and/or
in the requesting step, data packets from the second data stream are requested by the processing means at the predefined sample rate which is different from the second sample rate.

14. The method according to any of the claims 10-13, further comprising writing an output data stream with timestamp index to the storage means, at a predefined output sample rate and/or transmitting an output data stream with timestamp index to the communication network, at a predefined output sample rate.

15. The method according to any of the claims 10-14, wherein the processing means comprises a deep neural network and the method further comprises training an artificial intelligence model based on the at least one data stream.

Fig. 1

Fig. 2

Fig. 3

EP 4 290 822 A1

Fig. 4

12

| Output | Sampling | Name |
|---|---|---|
| Image | 0.033 | Front camera |
| Voxels | 0.100 | Lidar |
| Control | 0.010 | Vehicle controller |
| Perception | 0.050 | Neural network |
| List | 0.050 | Object detection |
| State | 0.020 | Vehicle position |
| State | 0.020 | Drone position |
| Image | 0.040 | Drone camera |
| Android | 0.500 | Control app |
| Web | 0.500 | Web debugger |

CoreID FilterID Type Output

Doj Core

Dro Dat

App Dat

Wel Dat

Motion control   Kinematics   ...ception
TCP/IP   ONNX
Raspberry PI   NVIDIA AGX

Fig. 5

Augmented memory

datastream $i$

datastream $j$

Filter — 601

Augmented memory
$t + 1$

datastream $k$

$t$   $t - \tau_i$

Fig. 6

13

Fig. 7

**Testing DataBlock**

| CoreID | FilterID | Type | Output | Sampling | Name |
|--------|----------|------|--------|----------|------|
| ... | ... | ... | ... | ... | ... |
| ... | ... | ... | ... | ... | ... |

| Training Infrastructure | | | |
|---|---|---|---|
| DataBlock storage | Base DNNs | Training Pipeline | Annotator |

| Low-level support libraries | |
|---|---|
| PyTorch | ONNX |

| Python Bindings | | |
|---|---|---|
| Robotics Toolkit | DataBlock | DataChannel |

| Filters Development in the Testing DataBlock | | | |
|---|---|---|---|
| C/C++ coding | Visualization filters | 3D visualizer | ONNX export |

Fig. 8

901

902    903

processing    storage
means    means

904

network
interface

Fig. 9

912    901    913    911

sensor    computer    actuator

Fig. 10

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/158899 A1 (RAMPALLI PAVAN SUDHEER [US] ET AL) 19 May 2022 (2022-05-19) * paragraph [0030] – paragraph [0033]; figure 5 * * paragraph [0040] – paragraph [0042] * * paragraph [0049] * ----- | 1-15 | INV. H04L47/28 G06F12/00 G06F13/00 H04L67/12 |
| A | EP 3 145 130 A1 (NIPPON TELEGRAPH & TELEPHONE [JP]) 22 March 2017 (2017-03-22) * paragraph [0121] – paragraph [0127] * ----- | 1-15 | |

TECHNICAL FIELDS
SEARCHED     (IPC)

H04L

The present search report has been drawn up for all claims

| Place of search | Date of completion of the search | Examiner |
|---|---|---|
| The Hague | 21 November 2022 | Ciurel, Cristian |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
........................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 22 46 5540

This annex lists the patent family members relating to the patent documents cited in the above-mentioned European search report.
The members are as contained in the European Patent Office EDP file on
The European Patent Office is in no way liable for these particulars which are merely given for the purpose of information.

21-11-2022

| Patent document cited in search report | | Publication date | Patent family member(s) | | Publication date |
|---|---|---|---|---|---|
| US 2022158899 | A1 | 19-05-2022 | NONE | | |
| EP 3145130 | A1 | 22-03-2017 | CN | 106464577 A | 22-02-2017 |
| | | | EP | 3145130 A1 | 22-03-2017 |
| | | | JP | 6356871 B2 | 11-07-2018 |
| | | | JP | 6453976 B2 | 16-01-2019 |
| | | | JP | 2017143583 A | 17-08-2017 |
| | | | JP | 2018038062 A | 08-03-2018 |
| | | | JP WO2015194604 A1 | | 27-04-2017 |
| | | | US | 2017149808 A1 | 25-05-2017 |
| | | | US | 2017230396 A1 | 10-08-2017 |
| | | | WO | 2015194604 A1 | 23-12-2015 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 10331136 B2
- US 9833901 B2
- US 10265848 B2

- US 9967222 B2
- US 10168690 B2